Europäisches Patentamt

European Patent Office

Office européen des brevets

(19)

(11) Numéro de publication: **0 279 135 B1**

(12) **FASCICULE DE BREVET EUROPEEN**

(45) Date de publication de fascicule du brevet:
**13.11.91**

(51) Int. Cl.⁵: **B60G 15/06, B60G 15/12**

(21) Numéro de dépôt: **87402960.6**

(22) Date de dépôt: **22.12.87**

(54) **Dispositif de suspension et de pivotement d'une roue directrice de véhicule automobile.**

(30) Priorité: **27.01.87 FR 8700950**

(43) Date de publication de la demande:
**24.08.88 Bulletin 88/34**

(45) Mention de la délivrance du brevet:
**13.11.91 Bulletin 91/46**

(84) Etats contractants désignés:
**DE GB IT**

(56) Documents cités:
**EP-A- 0 253 384
FR-A- 2 202 790
FR-A- 2 475 995
GB-A- 2 034 645**

(73) Titulaire: **AUTOMOBILES PEUGEOT
75, avenue de la Grande Armée
F-75116 Paris(FR)**

Titulaire: **AUTOMOBILES CITROEN
62 Boulevard Victor-Hugo
F-92200 Neuilly-sur-Seine(FR)**

(72) Inventeur: **Froumajou, Armand
11 bis rue du Docteur Laennec
F-95520 Osny(FR)**

(74) Mandataire: **Bouget, Lucien et al
Cabinet Lavoix 2, Place d'Estienne d'Orves
F-75441 Paris Cédex 09(FR)**

## Description

L'invention concerne un dispositif de suspension et de pivotement d'une roue directrice d'un véhicule automobile et plus particulièrement, un dispositif de suspension et de pivotement d'une roue avant directrice d'un véhicule automobile à traction avant.

L'augmentation des puissances transmises par les essieux de telles roues, dans les véhicules les plus récents, provoque certains défauts de comportement qui sont essentiellement dus au déport géométrique de l'axe de pivot par rapport au centre de la roue.

On pourrait envisager évidemment de supprimer ce déport en faisant tourner la roue autour d'un axe de pivot sensiblement vertical et très proche du plan médian de la roue. Un tel résultat pourrait être obtenu en prévoyant un support de roue comportant deux rotules implantées sur un axe situé pratiquement dans le plan médian de la roue et deux éléments de liaison transversale tels que des triangles reliés à l'une de leurs extrémités à la structure du véhicule et à leur autre extrémité aux rotules du support de roue. Une telle disposition est cependant encombrante dans la direction transversale et ne pourrait être utilisée dans le cas de groupes motopropulseurs transversaux dont l'utilisation a tendance à se généraliser.

La fixation des triangles de suspension exige de plus de éléments de structure de grande rigidité qui augmentent encore l'encombrement de la suspension. En outre, il est très difficile de trouver un emplacement satisfaisant pour la jambe télescopique de la suspension, dans une telle disposition.

On a proposé des suspensions de roue avant de véhicule automobile à jambe télescopique d'un type connu sous le nom de "suspension Mac Pherson". De telles suspensions comportent un support de roue relié de façon articulée, par l'intermédiaire d'une rotule, à l'une des extrémités d'un bras ou triangle inférieur sensiblement horizontal monté oscillant sur la structure du véhicule. Le support de roue est également relié à la structure du véhicule par l'intermédiaire d'un amortisseur télescopique sensiblement vertical dont le corps est solidaire du support de roue et dont la tige est reliée, à son extrémité supérieure, à la structure du véhicule, par un palier d'articulation. Le palier et la rotule définissent l'axe de pivotement autour duquel la roue s'oriente lorsqu'elle est sollicitée par une biellette de direction montée articulée sur une partie du support de roue.

Les suspensions de ce type, à cause de leur encombrement réduit et de leur facilité d'ancrage sur la structure du véhicule, sont celles dont l'adaptation aux véhicules ayant des groupes motopropulseurs transversaux est la plus facile et la plus satisfaisante. Cependant, de telles suspensions présentent des inconvénients qui se traduisent en particulier par un comportement au freinage et à l'accélération qui n'est parfois pas satisfaisant.

Les efforts de traction et de freinage sont transmis à la structure du véhicule, en partie par l'intermédiaire de la jambe télescopique qui est dans une position décalée par rapport au plan médian de la roue. Il en résulte des efforts parasites de coïncement de la jambe télescopique ou amortisseur qui sont nuisibles au confort procuré par la suspension. Ces efforts parasites peuvent même apparaître en dehors des phases de freinage ou d'accélération du véhicule.

En outre, le déport géométrique de l'axe de pivot par rapport au centre de la roue peut être relativement important dans le cas des suspensions Mac Pherson classiques. En particulier, dans le cas où le véhicule doit être équipé de pneumatiques de grande largeur, la position décalée de la jambe télescopique vers l'intérieur peut conduire à des déports notables. Il en résulte des micro-braquages de la roue au freinage et à l'accélération.

On connaît également une suspension pour véhicule automobile du type à jambe de force télescopique dont le support de roue est articulé à sa partie inférieure et à sa partie supérieure, respectivement, à une branche inférieure et à une branche supérieure solidaires du corps de la jambe télescopique, dans sa partie inférieure. La tige coulissante de la jambe télescopique est fixée, de manière élastique, sur la structure du véhicule, à son extrémité supérieure. La branche inférieure solidaire du corps de la jambe télescopique est d'autre part reliée, de façon articulée, à l'extrémité d'un triangle sensiblement horizontal monté oscillant sur la structure de véhicule.

Dans un tel dispositif, le déport peut être réduit à une valeur très faible, en prévoyant des branches solidaires de la jambe télescopique, ayant une étendue latérale suffisante. En outre, la jambe télescopique n'est pas entraînée en rotation, lors du pivotement de la roue.

Cependant, dans un tel dispositif, les efforts longitudinaux, au moment du freinage ou de l'accélération du véhicule, sont transmis en partie par la jambe télescopique qui est dans une position décalée latéralement par rapport au plan médian de la roue. Il en résulte des frottements dans la jambe télescopique qui réduisent le confort du véhicule et la durée de vie de la jambe télescopique ou amortisseur.

Le but de l'invention est donc de proposer un dispositif de suspension et de pivotement d'une roue directrice d'un véhicule automobile comprenant un support de roue relié de façon articulée à l'une des extrémités d'un bras oscillant inférieur sensiblement horizontal articulé par son autre extrémité sur la structure du véhicule, et à une jambe télescopique sensiblement verticale comportant un corps tubulaire situé au voisinage de la face intérieure de la roue et une tige coulissante fixée élastiquement à la structure du véhicule par son extrémité supérieure,

le support de roue étant relié à la partie inférieure du corps tubulaire par des moyens de pivotement de la roue autour d'un axe sensiblement vertical et proche du centre de la roue ainsi qu'à une biellette de direction pour commander le pivotement, ce dispositif de suspension présentant un encombrement transversal réduit, un déport faible ou nul et évitant tout coïncement ou frottement parasite dans la jambe télescopique, en particulier au freinage et à l'accélération du véhicule.

Dans ce but :
- la partie inférieure du support de roue est reliée au bras de suspension par une rotule,
- les moyens de pivotement reliant la partie supérieure du support de roue au corps tubulaire de la jambe télescopique sont constitués par un palier réalisant une butée axiale et dont l'axe passe par la rotule,
- et le dispositif comporte de plus une biellette supérieure sensiblement horizontale, de direction longitudinale par rapport au véhicule, située près du plan médian de la roue et articulée, à l'une de ses extrémités, sur un levier transversal solidaire de la partie supérieure du corps tubulaire de la jambe télescopique et, à son autre extrémité, sur la structure du véhicule.

Afin de bien faire comprendre l'invention, on va maintenant décrire, à titre d'exemple non limitatif, en se référant aux figures jointes en annexe, un mode de réalisation d'un dispositif de suspension et de pivotement suivant l'invention.

La figure 1 est une vue en élévation et en coupe partielle d'une roue et d'un dispositif de suspension et de pivotement selon l'invention, suivant un plan transversal au véhicule.

La figure 2 est une vue latérale en élévation simplifiée suivant 2 de la figure 1, du dispositif de suspension suivant l'invention.

La figure 3 est une vue à plus grande échelle de la roue et du support de roue représentés sur la figure 1.

La figure 4 est une vue en élévation analogue à celle de la figure 1, d'une variante de réalisation d'une suspension suivant l'invention.

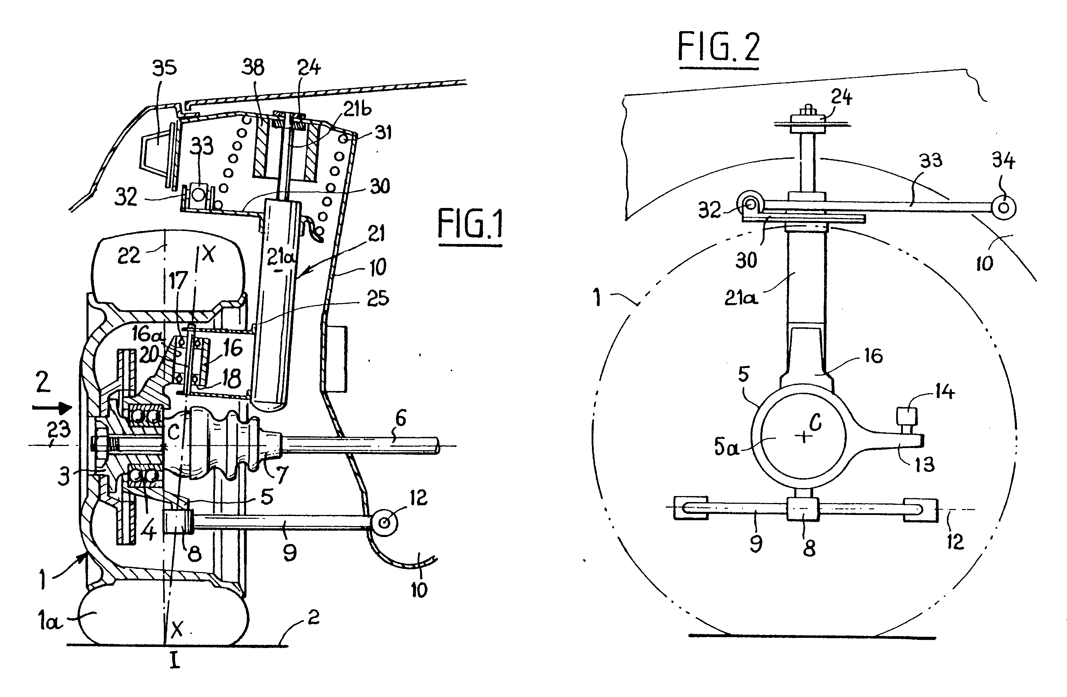

Sur la figure 1, on voit une roue avant 1 d'un véhicule automobile comportant un pneumatique 1a reposant sur le sol 2 constituant le plan de roulement de la roue. La roue comporte, de manière connue, suivant son axe, une fusée 3 montée rotative grâce à un roulement 4, dans la partie centrale creuse d'un support de roue 5. La roue 1 étant motrice, un demi-arbre d'entraînement 6 est relié à la fusée 3, par l'intermédiaire d'un joint homocinétique 7.

Le support de roue 5, comme il est visible sur les figures 1 et 2, est relié de façon articulée, grâce à une rotule inférieure 8, à un bras inférieur 9 sensiblement horizontal et monté oscillant sur la structure 10 du véhicule autour d'un axe horizontal 12. Le bras 9 comporte deux branches constituant un triangle de suspension.

Le support de roue 5 comporte de plus un levier 13 à l'extrémité duquel est articulée une biellette de direction 14 (figure 2).

Sur la figure 2, on n'a représenté, pour plus de clarté, que le contour de la roue 1 qui est montée rotative dans l'alésage central 5a du support 5.

La partie supérieure 16 du support de roue 5 constitue un bossage percé d'un alésage central 16a débouchant de chaque côté du bossage 16 et ayant un axe peu incliné par rapport à la verticale.

Aux extrémités de cet alésage 16a sont montés deux roulements 17 et 18 ayant un axe commun XX passant par le centre de la rotule 8. Les roulements 17 et 18 constituent un palier unique pour un axe 20 permettant de relier le support de roue 5 à la jambe télescopique 21 de la suspension.

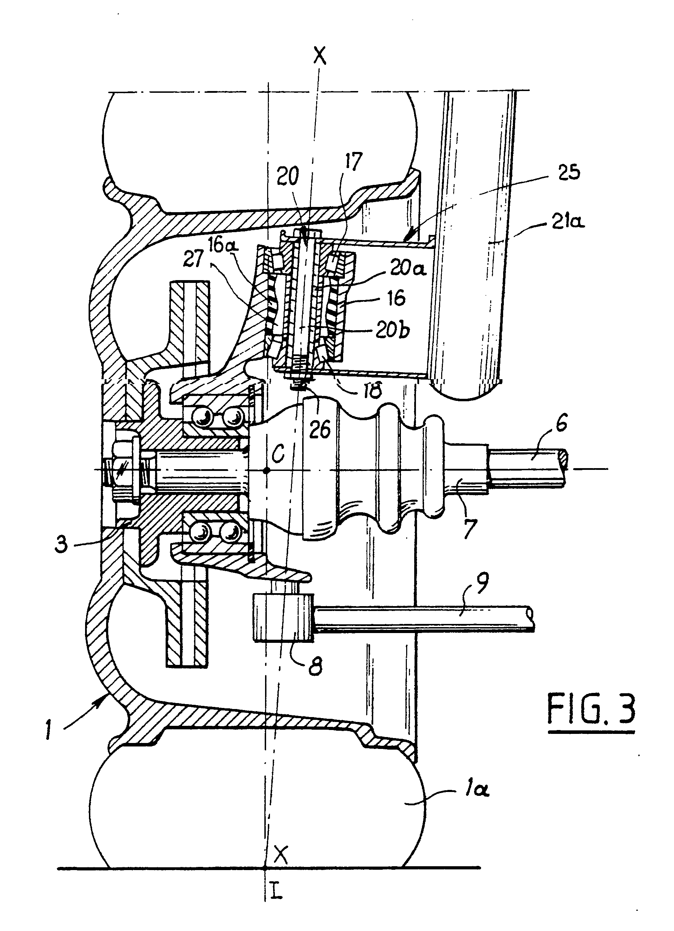

Le montage de l'axe 20 sera précisé en référence à la figure 3.

L'axe XX du palier 17-18 est peu éloigné du centre C de la roue, c'est-à-dire du point d'intersection du plan médian 22 et de l'axe de rotation 23 de la roue 1. D'autre part, cet axe XX coupe le plan de roulement 2 de la roue en un point I situé sur la trace de plan médian 22 de la roue sur ce plan de roulement. Le déport au sol de la suspension est donc nul.

La jambe télescopique 21 de la suspension comporte un corps tubulaire 21a et une tige coulissante 21b dont l'extrémité supérieure est fixée à la structure 10 du véhicule par l'intermédiaire d'une articulation élastique 24.

Le corps tubulaire 21a de la jambe télescopique est solidaire, à sa partie inférieure, d'une chape 25 de direction transversale permettant de relier la jambe télescopique 21 au support de roue 5, par l'intermédiaire de l'axe 20 monté tourillonnant dans le palier 17-18. Le palier 17-18 est disposé dans la partie interne supérieure de la roue 1. Les roulements 17 et 18 sont des roulements à rouleaux coniques qui sont logés dans les deux parties d'extrémité de l'alésage 16a usinées de façon à recevoir la partie externe des roulements. L'axe 20 est constitué par un tube externe 20a et par un axe central 20b constitué sous la forme d'une vis traversant à ses extrémités les deux flasques opposés de la chape 25 solidaire du corps 21a de la jambe télescopique 21. Un écrou 26 permet d'assembler par serrage, la chape 25, l'axe 20 et les bagues internes des roulements 17 et 18. Le support de roue 5 et la jambe télescopique 21 sont donc reliés par un moyen de pivotement constitué par un palier d'axe XX.

Les roulements 17 et 18 du palier sont disposés dans des sens opposés et une entretoise 27 est intercalée entre ces roulements 17 et 18 dans la direction axiale XX. Le palier 17-18 constitue une butée assurant le maintien du corps 21a de la jambe télescopique 21, par rapport au support de roue 5, dans la direction axiale XX.

L'entretoise 27 peut être réalisée en une matière élastique et assurer le rattrapage du jeu axial éventuel de la liaison entre le support de roue et la jambe télescopique, en fonctionnement.

Comme il est visible sur les figures 1 et 2, le corps tubulaire 21a de la jambe télescopique 21 est solidaire à sa partie supérieure d'une coupelle 30 constituant le moyen d'appui du ressort hélicoïdal de suspension 31 sur la jambe télescopique 21. L'extrémité supérieure du ressort 31 est en appui sous la structure 10 du véhicule automobile, autour de l'articulation élastique 24 assurant la liaison de la tige 21b de la jambe télescopique avec la structure.

De manière connue, le ressort 31 sera avantageusement décentré vers l'extérieur, afin de supprimer les forces de frottement dans la jambe télescopique.

La coupelle 30 porte à sa périphérie, dans une zone disposée dans une direction transversale et vers l'extérieur par rapport à la jambe télescopique 21, une articulation 32 dont l'axe est sensiblement horizontal. Cette articulation 32 permet de relier l'extrémité d'une biellette 33 à la coupelle 30 solidaire du corps 21a de la jambe télescopique.

La biellette 33 est reliée à son extrémité opposée à l'articulation 32 à une seconde articulation 34 permettant sa liaison à la structure 10 du véhicule. La biellette 33, sensiblement horizontale, est placée dans la direction longitudinale du véhicule et à proximité du plan médian 22 de la roue 1.

La coupelle 30 constitue un levier transversal reliant l'extrémité de la biellette 33 au corps 21a de la jambe télescopique 21.

Il est à remarquer que le corps tubulaire 21a de la jambe télescopique 21 n'est pas lié au support de roue, lors de son pivotement autour de l'axe XX. La coupelle de ressort 30 ne subit donc pas non plus de rotation, contrairement à ce qu'il en est dans le cas d'une suspension Mac Pherson. Il n'est donc pas nécessaire de mettre le ressort de suspension en appui sur la structure du véhicule par l'intermédiaire d'un palier tournant.

On va maintenant décrire le fonctionnement du dispositif de suspension et de pivotement suivant l'invention, successivement dans le cas d'un braquage de la roue, lors du débattement vertical de cette roue et lorsqu'un effort de traction ou de freinage est transmis par la roue à la structure du véhicule.

Dans le cas du braquage de la roue, la biellette de direction 14 agit sur le levier 13 solidaire du support de roue 5 qui est ainsi mis en rotation autour de l'axe XX défini par le palier 17-18 et la rotule 8. Pendant le pivotement de la roue, la partie supérieure de la suspension est maintenue stable par l'articulation 24 et la biellette longitudinale 33, l'un et l'autre reliés à la structure 10 du véhicule.

Lors d'un débattement vertical de la roue, celle-ci est guidée par le triangle de suspension 9 qui pivote autour de son axe 12 et par le coulissement du corps 21a de la jambe télescopique par rapport à la tige 21b. La biellette 33 pivote dans un plan sensiblement vertical et assure la stabilité longitudinale de la suspension grâce à sa fixation articulée sur la structure 10 du véhicule.

Lorsqu'un effort de traction est transmis au centre de la roue, cet effort parvient à la partie inférieure de la structure 10 du véhicule, de façon classique, par l'intermédiaire de la rotule 8 et du triangle de suspension 9. Cet effort de traction parvient également à la partie supérieure de la structure 10 par l'intermédiaire de la biellette 33 qui agit dans un plan voisin du plan médian de la roue, ce qui supprime ainsi toute contrainte dans la jambe télescopique 21 qui fonctionne ainsi sans aucun forttement ni coïncement. Pour parvenir à la biellette 33, l'effort de traction chemine, par l'intermédiaire des roulements coniques 17 et 18 qui jouent le rôle d'un encastrement, puis par l'intermédiaire de la chape 25, du corps d'amortisseur 21a et de la coupelle de ressort 30 qui ramène l'effort de traction à l'articulation 32, dans une zone voisine du plan médian 22 de la roue 1.

Lors d'un freinage, l'effort de freinage transmis à la roue, au niveau du sol, vers l'arrière est acheminé vers la structure du véhicule par les mêmes éléments que dans le cas de la traction.

Il est à noter que dans les deux cas, pour un véhicule se déplaçant en marche avant, les efforts introduits dans la biellette longitudinale 33 sont des efforts de traction. Il n'est donc pas nécessaire de prévoir un dimensionnement de la biellette 33 pour lui permettre de résister au flambage.

Il est visible sur la figure 1 que la suspension selon l'invention est peu encombrante, en particulier dans sa partie supérieure et qu'elle peut permettre l'implantation d'un élément de structure, éventuellement caissonné, tel que l'élément 35 situé dans le prolongement transversal de la partie supérieure de la suspension, vers l'extérieur.

La disposition de la biellette 33 au-dessus de la roue 1 permet de placer cette biellette au voisinage immédiat du plan médian de roue 22.

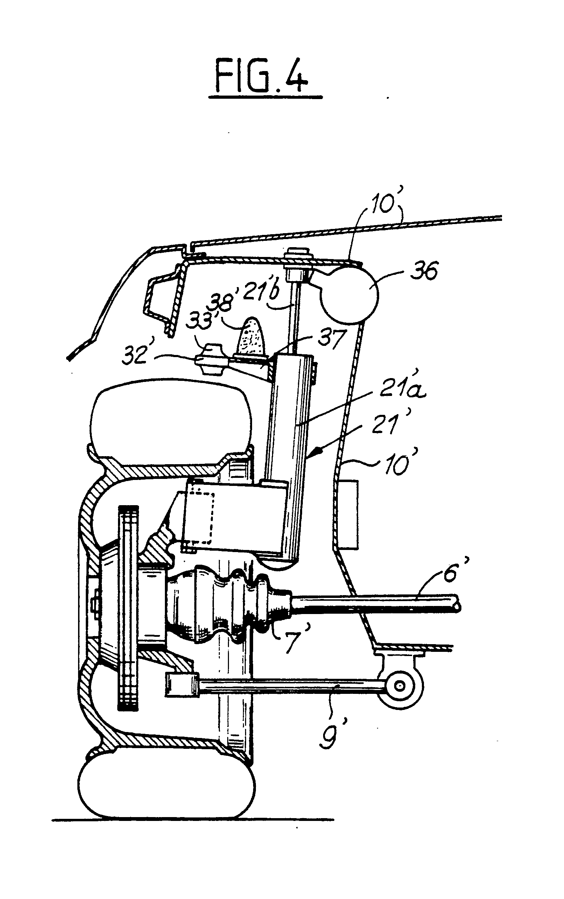

Sur la figure 4, on a représenté une variante de réalisation d'un dispositif de suspension et de pivotement suivant l'invention, les éléments correspondants sur les figures 1, 2 et 3 d'une part et 4 d'autre part portant les mêmes repères mais avec l'exposant ' (prime).

Dans ce mode de réalisation, la jambe télescopique 21' n'est plus constituée par un amortisseur mais par un vérin hydraulique associé à un ressort pneumatique 36 pour constituer une suspension oléopneumatique. La partie supérieure du corps 21'a du vérin porte un levier de direction transversale 37 à l'extrémité duquel est articulée la bielle 33', par l'intermédiaire d'une articulation 32'. Le corps 21'a du vérin et le levier 37 étant fixes en rotaiton, la butée 38' de la suspension peut être fixée sur le levier 37. On évite ainsi toute contrainte de flexion dans la tige 21'b du vérin.

Dans le cas du dispositif représenté sur la figure 1, la butée 38 placée coaxialement par rapport à la tige 21b de l'amortisseur télescopique est fixée directement sur la structure 10 du véhicule, son appui comme celui du ressort 30 pouvant s'effectuer directement, le corps 21a de l'amortisseur étant fixe en rotation.

Le dispositif de suspension et de pivotement suivant l'invention présente donc les avantages principaux suivants : le déport de l'axe de pivotement par rapport au centre de la roue ou au sol peut être rendu très faible et éventuellement nul, l'encombrement transversal du dispositif de suspension et de pivotement est faible et les efforts de traction et de freinage sont transmis à la structure du véhicule dans le plan médian de la roue ou à son voisinage par une biellette, ce qui évite des efforts parasites et des frottements dans la jambe télescopique.

L'invention ne se limite pas aux modes de réalisation qui ont été décrits.

L'invention peut s'appliquer à des suspensions d'un type différent de ceux qui ont été décrits, la liaison entre la biellette supérieure et le corps de la jambe télescopique peut être réalisée par d'autres moyens que ceux qui ont été décrits et le palier de liaison entre le support de roue et le corps de la jambe télescopique peut avoir une forme différente de celle qui a été décrite.

**Revendications**

1. Dispositif de suspension et de pivotement d'une roue directrice (1) d'un véhicule automobile comprenant un support de roue (5) relié de façon articulée à l'une des extrémités d'un bras oscillant inférieur (9) sensiblement horizontal articulé par son autre extrémité sur la structure (10) du véhicule, et à une jambe télescopique (21) sensiblement verticale comportant un corps tubulaire (21a) situé au voisinage de la face intérieure de la roue et une tige coulissante (21b) fixée élastiquement à la structure (10) du véhicule par son extrémité supérieure (24), le support de roue (5) étant relié à la partie inférieure du corps tubulaire (21a) par des moyens de pivotement (17, 18) de la roue autour d'un axe XX sensiblement vertical et proche du centre C de la roue ainsi qu'à une biellette de direction pour commander le pivotement, caractérisé en ce que :
   - la partie inférieure du support de roue (5) est reliée au bras de suspension (9) par une rotule (8),
   - les moyens de pivotement (17, 18) reliant la partie supérieure du support de roue (5) au corps tubulaire (21a) de la jambe télescopique (21) sont constitués par un palier (17, 18) réalisant une butée axiale et dont l'axe passe par la rotule (8),
   - et le dispositif comporte de plus une biellette supérieure (33) sensiblement horizontale de direction longitudinale par rapport au véhicule, située près du plan médian (22) de la roue (1) et articulée, à l'une de ses extrémités, sur un levier (30) transversal solidaire de la partie supérieure du corps tubulaire (21a) de la jambe télescopique (21) et, à son autre extrémité, sur la structure (10) du véhicule.

2. Dispositif de suspension et de pivotement suivant la revendication 1, caractérisé par le fait que le palier (17, 18) est constitué par deux roulements montés dans un alésage (16a) ménagé dans le support de roue (5) et ayant un axe commun (20) relié au corps (21a) de la jambe télescopique (21).

3. Dispositif de suspension suivant la revendication 2, caractérisé par le fait que les roulements (17, 18) sont des roulements à rouleaux coniques dirigés en sens inverse l'un de l'autre.

4. Dispositif de suspension suivant l'une quelconque des revendications 2 et 3, caractérisé par le fait qu'une entretoise élastique (27) est disposée entre les roulements (17, 18), à l'intérieur de l'alésage (16a) du support de roue (5).

5. Dispositif de suspension suivant l'une quelconque des revendications 2, 3 et 4, caractérisé par le fait que le corps tubulaire (21a) de la jambe télescopique (21) est relié à l'axe (20) du palier (17, 18) par une chape (25) dirigée dans la direction transversale et vers l'extérieur, le palier (17, 18) étant placé à l'intérieur de la roue (1).

6. Dispositif de suspension suivant l'une quelconque des revendications 1 à 5, caractérisé par le fait que la biellette (33) est disposée au-dessus de la roue (1).

7. Dispositif de suspension suivant l'une quelconque des revendications 1 à 6, caractérisé par le fait que le levier solidaire du corps tubulaire (21a) de la jambe télescopique (21) est constitué par une partie d'extension transversale, direigée vers l'extérieur, d'une coupelle (30) d'appui d'un ressort hélicoïdal (31) associé à la jambe télescopique (21).

8. Dispositif de suspension suivant l'une quelconque des revendications 1 à 6, caractérisé par le fait que le levier (37) solidaire du corps (21'a) de la jambe télescopique (21') porte une butée (38') pour limiter le débattement vertical de la suspension, par appui sur la structure (10) du véhicule.

9. Suspension suivant l'une quelconque des revendications 1 à 8, caractérisé par le fait que la jambe télescopique (21) est un amortisseur.

10. Suspension suivant l'une quelconque des revendications 1 à 8, caractérisée par le fait que la jambe télescopique (21') est un vérin hydraulique.

**Claims**

1. A device for the suspension and pivoting of a leading wheel (1) of an automotive vehicle, comprising a wheel support (5) hinged to one of the arms of a substantially horizontal pull rod (9) hinged via its other arm to the vehicle bodywork (10), and to a substantially vertical telescopic leg (21) comprising a tubular body (21a) disposed adjacent the inner face of the wheel and a sliding rod (21b) resiliently attached by its upper end (24) to the vehicle bodywork (10), the wheel support (5) being connected to the lower portion of the tubular body (21a) via means (17, 18) for pivoting the wheel around a substantially vertical axis XX close to the centre C of the wheel and also to a guide rod to control pivoting, characterized in that the lower portion of the wheel support (5) is connected to the suspension arm (9) via a rod end (8), the pivoting means (17, 18) connecting the upper portion of the wheel support (5) to the tubular body (21a) of the telescopic leg (21) are formed by a bearing (17, 18) which forms an axial abutment and whose axis extends through the rod end (8), and the device also comprises a substantially horizontal upper rod (33) extending longitudinally of the vehicle and disposed close to the central plane (22) of the wheel (1) and hinged at one of its ends to a transverse lever (37) connected to the upper portion of the tubular body (21a) of the telescopic leg (21) and at its other end to the vehicle bodywork (10).

2. A suspension and pivoting device according to claim 1, characterized in that the bearing (17, 18) is formed by two rolling bearings which are mounted in a bore (16a) formed in the wheel support (5) and have a common spindle (20) connected to the body (21a) of the telescopic leg (21).

3. A suspension device according to claim 2, characterized in that the rolling bearings (17, 18) are taper roller bearings directed oppositely from one another.

4. A suspension device according to either of claims 2 or 3, characterized in that a resilient strut (27) is disposed between the rolling bearing (17, 18) inside the bore (16a) formed in the wheel support (5).

5. A suspension device according to any of claims 2, 3 or 4, characterized in that the tubular body (21a) of the telescopic leg (21) is connected to the spindle (20) of the bearing (17, 18) via a transversely and outwardly directed clevis (25), the bearing (17, 18) being disposed inside the wheel (1).

6. A suspension device according to any of claims 1 to 5, characterized in that the upper rod (33) is disposed above the wheel (1).

7. A suspension device according to any of claims 1 to 6, characterized in that the lever connected to the tubular body (21a) of the telescopic leg (21) is formed by an outwardly directed transverse extension portion of a bearing cup (30) of a helical spring (31) associated with the telescopic leg (21).

8. A suspension device according to any of claims 1 to 6, characterized in that the lever (37) connected to the body (21'a) of the telescopic leg (21') bears a stop (38') to limit the vertical movement of the suspension by abutting the vehicle bodywork (10).

9. A suspension device according to any of claims 1 to 8, characterized in that the telescopic leg (21) is a shock absorber.

10. A suspension device according to any of claims 1 to 8, characterized in that the telescopic leg (21') is a hydraulic jack.

**Patentansprüche**

1. Aufhängungs- und Schwenkvorrichtung für ein gelenktes Rad (1) eines Kraftfahrzeuges, mit einem Radträger (5), welcher an einem der Enden eines im wesentlichen horizontalen unteren Lenkers (9), der mit seinem anderen Ende am Fahrzeugaufbau (10) angelenkt ist, und an einem im wesentlichen vertikalen Teleskopbein (21) angelenkt ist, welches einen im Bereich der Innenseite des Rades gelegenen rohrförmigen Körper (21a) und einen mit seinem oberen Ende (24) elastisch am Fahrzeugaufbau (10) befestigten Gleitstab (21b) umfaßt, wobei der Radträger (5) mit dem unteren Teil des röhrförmigen Körpers (21a) durch Schwenkmittel (17, 18) zum Schwenken des Rades um eine im wesentlichen vertikale und in der Nähe der Radmitte C gelegene Achse XX sowie mit einer Lenkstange zur Steuerung der Schwenkung verbunden ist, dadurch gekennzeichnet, daß
   - der untere Teil des Radträgers (5) mit dem Lenker (9) über ein Kugelgelenk (8) verbunden ist,
   - die Schwenkmittel (17, 18), welche den oberen Teil des Radträgers (5) mit dem rohrförmigen Körper (21a) des Teleskopbeins (21) verbinden, durch ein Lager (17, 18) gebildet sind, das einen Axialanschlag verwirklicht und dessen Achse durch das Kugelgelenk (8) verläuft,
   - und die Vorrichtung ferner einen im wesentlichen horizontalen, in Längsrichtung des Fahrzeuges verlaufenden oberen Schwingarm (33), welcher in der Nähe der Mittelebene (22) des Rades (1) liegt und und einem seiner Enden an einem mit dem oberen Teil des rohrförmigen Körpers (21a) des Teleskopbeins (21) fest verbundenen Querhebel (30) und an seinem anderen Ende am Fahrzeugaufbau (10) angelenkt ist.

2. Aufhängungs- und Schwenkvorrichtung nach Anspruch 1, dadurch gekennzeichnet, daß das Lager (17, 18) durch zwei in einer Bohrung (16a) des Radträgers (5) angebrachte Wälzlager, die eine mit dem Körper (21) des Teleskopbeins (21) verbundene Achse (20) haben, gebildet ist.

3. Aufhängungsvorrichtung nach Anspruch 2, dadurch gekennzeichnet, daß die Wälzlager (17, 18) zueinander entgegengesetzt gerichtete Kegelrollenlager sind.

4. Aufhängungsvorrichtung nach irgendeinem der Ansprüche 2 und 3, dadurch gekennzeichnet, daß ein elastisches Distanzstück (27) zwischen den Wälzlagern (17, 18) im Inneren der Bohrung (16a) des Radträgers (5) angeordnet ist.

5. Aufhängungsvorrichtung nach irgendeinem der Ansprüche 2, 3 und 4, dadurch gekennzeichnet, daß der rohrförmige Körper (21a) des Teleskopbeins (21) mit der Welle (20) des Lagers (17, 18) durch eine quer und nach außen gerichtete Abdeckung (25) verbunden ist, wobei das Lager (17, 18) im Inneren des Rades (1) angeordnet ist.

6. Aufhängungsvorrichtung nach irgendeinem der Ansprüche 1 bis 5, dadurch gekennzeichnet, daß der Schwingarm (33) über dem Rad (1) angeordnet ist.

7. Aufhängungsvorrichtung nach irgendeinem der Ansprüche 1 bis 6, dadruch gekennzeichnet, daß der mit dem rohrförmigen Körper (21a) des Teleskopbeins (21) fest verbundene Hebel durch einen nach außen gerichteten Quererstreckungsteil einer Anlageschale (30) für eine dem Teleskopbein (21) zugeordnete Schraubenfeder (31) gebildet ist.

8. Aufhängungsvorrichtung nach irgendeinem der Ansprüche 1 bis 6, dadurch gekennzeichnet, daß der mit dem Körper (21'a) des Teleskopbeins (21') fest verbundene Hebel (37) einen Anschlag (38') zum Begrenzen der Vertikaldurchfederung der Aufhängung durch seine Anlage am Fahrzeugaufbau (10) trägt.

9. Aufhängung nach irgendeinem der Ansprüche 1 bis 8, dadurch gekennzeichnet, daß das Teleskopbein (21) ein Stoßdämpfer ist.

10. Aufhängung nach irgendeinem der Ansprüche 1 bis 8, dadurch gekennzeichnet, daß das Teleskopbein (21') ein Hydraulikzylinder ist.

FIG.1

FIG.2

EP 0 279 135 B1

EP 0 279 135 B1

FIG. 3

9

# FIG.4